# EUROPÄISCHE PATENTANMELDUNG

(11) **EP 2 698 600 A1**
(43) Veröffentlichungstag der Anmeldung: **19.02.2014**
(21) Anmeldenummer: 12180750.7
(22) Anmeldetag: 16.08.2012
(51) Int. Cl.: G01C 3/08, G01C 15/00

(54) **Entfernungsmessmodul**

(71) Anmelder: Leica Geosystems AG, 9435 Heerbrugg (CH)
(72) Erfinder: Grabher, Thomas, A-6774 Tschagguns (AT)
(74) Vertreter: Gyaja, Christoph Benjamin

(57) **Zusammenfassung**

Die Erfindung betrifft ein Entfernungsmessmodul (100) zur Verbindung mit einem handhaltbaren elektronischen Gerät (200) zu einem handhaltbaren Entfernungsmessgerät (1), wobei das Entfernungsmessmodul (100) eine Laserentfernungsmesseinheit (110) zur Messung einer Distanz (9) zu einem Zielpunkt (10) mittels eines Laserstrahls (7) aufweist, gekennzeichnet durch einen Schnittstellen-Stecker (190), Befestigungsmittel (160) zur Aufnahme des handhaltbaren elektronischen Gerätes (200) und Anschlagmittel (170) zur Referenzierung an einem externen Objekt, wobei im Rahmen der Aufnahme des handhaltbaren elektronischen Gerätes (200) eine elektronische Steckverbindung (90) zur Übertragung von Daten zwischen dem Entfernungsmessmodul (100) und dem handhaltbaren elektronischen Gerät (200) erzeugbar ist, und als eine Folge der Aufnahme das handhaltbare elektronische Gerät (200), am Gehäuse (140) des Entfernungsmessmoduls (100) anliegend, das Gehäuse (140) im wesentlichen positionsfest kontaktiert, und die Anschlagmittel (170) zum Anlegen an ein Objekt bei der Durchführung einer Messung vorgesehen sind und derart gestaltet sind, dass in einer bekannten, definierten räumlichen Beziehung zur Laserentfernungsmesseinheit (110) eine Referenzebene (17) definiert ist, wobei Daten über die räumliche Beziehung in einer Speicher- und Auswertekomponente (120) gespeichert sind. Die Erfindung betrifft ausserdem ein handhaltbares Entfernungsmessgerät (1), ein Verfahren zum Messen einer Entfernung mittels des Entfernungsmessgerätes (1) und ein Computerprogrammprodukt zur Steuerung des Entfernungsmessgerätes (1).

## Beschreibung

Die vorliegende Erfindung betrifft ein handhaltbares Entfernungsmessgerät, bestehend aus einem handhaltbaren elektronischen Gerät, insbesondere einem Smartphone oder Tablett-Computer, und einem Entfernungsmessmodul. Die Erfindung betrifft ausserdem ein Entfernungsmessmodul zur Verwendung in einem solchen Entfernungsmessgerät.

In vielen Anwendungen werden Verfahren und Systeme zur Entfernungsmessung verwendet. Beispiele hierfür sind ausgesprochen präzise Vermessungen in geodätischen Applikationen, aber auch Messaufgaben im Bereich der Bauinstallation oder für industrielle Prozesssteuerungen.

Für diese Aufgaben werden stationäre, bewegbare oder auch handhaltbare Entfernungsmessgeräte eingesetzt, welche eine optische Entfernungsmessung zu einem ausgewählten Messpunkt ausführen. Zumeist wird hierbei ein Laserstrahl emittiert und nach Reflektion am Ziel wieder empfangen und ausgewertet. Zur Bestimmung der Entfernung stehen dabei verschiedene Messprinzipien zur Verfügung, wie z.B. Phasen- oder Laufzeitmessung.

Insbesondere im Bereich der Bauinstallation oder Bauabnahme werden tragbare und in der Hand zu haltende Geräte verwendet, welche bezüglich einer zu vermessenden Struktur angelegt werden und dann eine Entfernungsmessung zu einer Oberfläche durchführen. Ein für solche Anwendungen geeignetes und typisches handhaltbares Entfernungsmessgerät wird beispielsweise in der EP 0 738 899 und der EP 0 701 702 beschrieben.

Da für die meisten Anwendungen ein auf der anzumessenden Oberfläche sichtbarer Messpunkt vorteilhaft ist, werden zumeist rote Laser als Strahlungsquellen für die Entfernungsmessung verwendet. Mit Entfernungsmessern des Stands der Technik sind so bei grosser Handhabungsfreundlichkeit Genauigkeiten bis in den Millimeterbereich erzielbar. Mit derzeit erhältlichen handhaltbaren Entfernungsmessgeräten können Messungen von einem Punkt zu einem anderen Punkt durchgeführt werden, zu dem eine Sichtverbindung besteht. Wenn das Ziel verdeckt ist, können mittels eines Neigungssensors auch Horizontalmasse ermittelt werden.

Nachteilig bei allen diesen Lösungen ist ein hoher konstruktiver und Materialaufwand, da zum Ermöglichung der Bedienung und zur Erhöhung des Bedienungskomforts zusätzlich zu dem eigentlichen Lasermessmodul weitere Komponenten verbaut werden, was insgesamt zu deutlich erhöhten Kosten des Messgerätes führt. Zu diesen zusätzlichen Komponenten zählen etwa ein Display, z. B. ein Bildschirm oder Touchscreen, Eingabemittel, Kameras, Recheneinheiten und zusätzliche Sensoren, wie Gyroskope und Neigungssensoren.

Dabei sind diese Komponenten heute standardmässig in anderen handhaltbaren Geräten, wie Mobiltelefonen, insbesondere sogenannten Smartphones oder PDAs (Personal Digital Assistants), Tablett-Computern oder Laptop-Computern enthalten. Die Benutzung solcher handhaltbarer Geräte zur Ermittlung räumlicher Koordinaten mittels einer Kamera und einem Gyroskop ist in der EP 2 413 097 A2 geoffenbart.

Die Verbindung eines Lasermessmoduls mit einem solchen handhaltbaren Gerät kann den konstruktiven Aufwand und die Materialkosten gegenüber einer Lösung als eigenständiges Entfernungsmessgerät deutlich reduzieren. Handhaltbare laserbasierte Entfernungsmessgeräte mit einer Möglichkeit, Daten über eine Bluetooth-Verbindung zu anderen elektronischen Geräten zu übertragen, sind bereits bekannt (beispielsweise mit dem "Disto™ D3a BT" oder dem "Disto™ D8" der Leica Geosystems). Diese sind jedoch auch einzeln verwendbar und weisen daher stets ein Benutzer-Interface, das heisst eine Anzeigevorrichtung und Eingabemittel, auf. Durch das gleichzeitige Hantieren mit mehreren Geräten beim Vermessen geht ausserdem der Vorteil der handhaltbaren Lösung weitestgehend verloren. Besonders unpraktisch ist dabei, wenn der Datenaustausch über eine Kabelverbindung erfolgt.

Es ist daher eine Aufgabe der vorliegenden Erfindung, ein Entfernungsmessmodul bereitzustellen, das mit einem geringeren konstruktiven Aufwand und geringeren Materialkosten herzustellen ist als herkömmliche Entfernungsmessgeräte.

Es ist insbesondere eine Aufgabe der Erfindung, ein solches Entfernungsmessmodul bereitzustellen, das auf einfache Weise zusammen mit bestimmten handhaltbaren elektronischen Geräten verwendbar ist.

Eine weitere Aufgabe der Erfindung ist es, ein solches Entfernungsmessmodul bereitzustellen, das auf einfache Weise gemeinsam mit einem elektronischen Gerät in einer Hand gehalten und dabei über ein Benutzer-Interface des elektronischen Gerätes gesteuert werden kann.

Eine besondere Aufgabe der Erfindung ist es, ein solches Entfernungsmessmodul bereitzustellen, das ohne solche Komponenten ausgestaltet ist, die durch das elektronische Gerät bereitgestellt werden, insbesondere ohne eine Anzeigevorrichtung, Eingabemittel und Neigungssensoren.

Eine weitere Aufgabe der Erfindung ist es, ein solches Entfernungsmessmodul bereitzustellen, das wenigstens vorübergehend mit einem handhaltbaren elektronischen Gerät zu einem funktionsfähigen handhaltbaren Laserentfernungsmessgerät zusammenfügbar ist.

Eine spezielle Aufgabe der Erfindung ist es, ein solches Entfernungsmessmodul bereitzustellen, das in Verbindung mit einem handhaltbaren elektronischen Gerät eine Bestimmung von Distanzen zwischen entfernten Punkten ermöglicht.

Es ist eine weitere Aufgabe der vorliegenden Erfindung, ein verbessertes handhaltbares Laserentfernungsmessgerät bereitzustellen, das in zwei Komponenten zerlegbar ist, von denen eine als ein vielseitig, insbesondere auch für andere als Vermessungszwecke verwendbares, elektronisches Gerät ausgestaltet ist, insbesondere als ein Smartphone oder ein Tablett-Computer.

Eine weitere Aufgabe der Erfindung ist es, ein solches Entfernungsmessgerät mit einem geringeren konstruktiven Aufwand und geringeren Materialkosten bereitzustellen.

Eine spezielle Aufgabe der Erfindung ist es, ein solches Entfernungsmessgerät bereitzustellen, das eine Bestimmung von Distanzen zwischen entfernten Punkten ermöglicht.

Des weiteren ist es eine Aufgabe der Erfindung, ein Verfahren zum Messen von Entfernungen mittels eines solchen Entfernungsmessmoduls bzw. mittels eines solchen Entfernungsmessgerätes bereitzustellen.

Ausserdem ist es eine weitere Aufgabe der vorliegenden Erfindung, ein Computerprogrammprodukt zur Steuerung eines solchen Entfernungsmessmoduls bzw. eines solchen Entfernungsmessgerätes bereitzustellen

Mindestens eine dieser Aufgaben wird durch die Verwirklichung der kennzeichnenden Merkmale der unabhängigen Ansprüche gelöst. Vorteilhafte Ausgestaltungen der Erfindung finden sich dabei in den jeweils abhängigen Ansprüchen.

Erfindungsgemäss ist ein Entfernungsmessmodul mit einer Laserentfernungsmesseinheit dazu ausgestaltet, vorübergehend eine feste Verbindung mit einem handhaltbaren elektronischen Gerät, insbesondere einem Smartphone oder Tablett-Computer, einzugehen und dabei auf bestimmte Komponenten des elektronischen Gerätes zuzugreifen.

Dazu weist das Entfernungsmessmodul Befestigungsmittel zur Aufnahme des elektronischen Gerätes auf. Diese sind vorzugsweise zur Aufnahme eines bestimmten Typs von elektronischem Gerät mit bekannten Ausmassen bestimmt. Vorzugsweise sind die Aufnahmemittel als Einschubvorrichtung ausgestaltet, in die ein Smartphone bekannter Ausmasse einführbar ist. Alternativ können die Aufnahmemittel an das Design und die Ausmasse verschiedener Typen anpassbar sein, so dass beispielsweise verschiedene Modelle eines Smartphones oder auch Geräte unterschiedlicher Hersteller verwendet werden können.

Erfindungsgemäss weist die Messeinheit eine Datenschnittstelle zur Verbindung mit einer Datenschnittstelle des elektronischen Gerätes auf. Diese ist dabei auf die Schnittstelle des elektronischen Gerätes angepasst und kann insbesondere ein 30-Pin-Stecker oder ein USB-Stecker sein. Auch ist es möglich, die Datenschnittstelle des Entfernungsmessmoduls austauschbar zu gestalten, um mit Geräten unterschiedlicher Hersteller kompatibel zu sein. Die Austauschbarkeit kann beispielsweise über einsteckbare Adapter bereitgestellt werden. Zusätzlich kann die Datenschnittstelle Mittel zur kabellosen Datenübertragung aufweisen, beispielsweise über Bluetooth- oder WLAN-Verbindungen. Erfindungsgemäss ist das Gehäuse des Entfernungsmessmoduls am der Laserentfernungsmesseinheit gegenüberliegenden Ende so geformt, dass eine Messreferenz bereitgestellt wird. Die Messreferenz weist eine bekannte Distanz zur Laserentfernungsmesseinheit auf und ist derart an ein Referenzobjekt, beispielsweise eine Wand anlegbar, dass eine Distanz zwischen dem Objekt und der Laserentfernungsmesseinheit ableitbar ist, wodurch eine Distanz zwischen dem Objekt und einem durch die Laserentfernungsmesseinheit vermessenen Punkt berechenbar ist. Ein für das Gerät ermittelter Wert für die Distanz zwischen der Messreferenz und der Laserentfernungsmesseinheit ist vorzugsweise in einer Speichereinheit des Entfernungsmessmoduls gespeichert und für ein externes elektronisches Gerät abrufbar.

In einer bevorzugten Ausführungsform ist die erfindungsgemässe Entfernungsmesseinheit zur Verwendung mit einem handhaltbaren elektronischen Gerät ausgestaltet, das einen Neigungssensor zur Erfassung mindestens einer Längsneigung des Gerätes aufweist. Optional können zusätzlich ein Zwei-Achsen-Neigungssensor auf der Horizontalachse, ein Kompass und/oder ein Gyroskop enthalten sein. Alternativ oder zusätzlich kann auch das erfindungsgemässe Entfernungsmessmodul einen Neigungssensor, einen Kompass und/oder ein Gyroskop beinhalten, beispielsweise wenn es zur Verbindung mit einem bestimmten Typ elektronischen Gerätes ausgestaltet ist, der diese bestimmten Komponenten nicht aufweist, oder deren Genauigkeit für die gewünschten Anwendungen unzureichend ist.

Die Bestimmung der Lage des Entfernungsmessmoduls im Raum kann in Bezug auf ein Referenzkoordinatensystem mittels des eigenen Neigungssensors bzw. des in dem handhaltbaren elektronischen Gerätes bereitgestellten Neigungssensors vollautomatisch ermittelt werden. Alle Lagefehler des Entfernungsmessmoduls können dadurch vollautomatisch kompensiert werden. Eine erste Ausrichtung des Systems kann optional anhand eines Kompasses oder eines GPS-Sensors erfolgen.

Durch die Integration zusätzlicher Komponenten zum Bestimmen von Winkeln - entweder im Entfernungsmessmodul oder im angeschlossenen elektronischen Gerät - ist das erfindungsgemässe Entfernungsmessmodul in der Lage, ausser Distanzen auch horizontale und vertikale Raumwinkel zu messen.

In einer bevorzugten Ausführungsform umfassen diese zur Winkelbestimmung geeigneten Komponenten, wie in der Europäischen Patentanmeldung mit dem Aktenzeichen EP 12169729 beschrieben, eine Bilderfassungseinheit mit mindestens einer Kamera sowie eine Bildauswerteeinheit. Die Kamera kann vorzugsweise im Entfernungsmessmodul integriert sein oder auch eine Kamera des angeschlossenen elektronischen Geräts sein. Ebenso kann die Bildauswerteeinheit vorzugsweise im elektronischen Gerät bereitgestellt sein, oder alternativ im Entfernungsmessmodul.

In einer besonders bevorzugten Ausführungsform weist das erfindungsgemässe Entfernungsmessmodul eine Bilderfassungseinheit mit mindestens zwei, im Speziellen mindestens drei Kameras auf. Wie in der Europäischen Patentanmeldung mit dem Aktenzeichen EP 12169729 beschrieben, kann das Entfernungsmessmodul mit einer solchen Bilderfassungseinheit Entfernungen zwischen zwei Punkten ermitteln, ohne dass ein Referenzpunkt direkt zugänglich sein muss. Das Entfernungsmessgerät kann so das Spannmass zwischen zwei beliebigen mit dem Laserpunkt anzielbaren Punkten darstellen. Das erfindungsgemässe handhaltbare Entfernungsmessgerät kann ebenso als Winkelmesser und zum Anzeigen von bestimmten, beispielsweise benutzerdefinierten, Winkeln eingesetzt werden.

Die Bilderfassungseinheit dieser Ausführungsform ist dazu ausgestaltet, Bilder des Messbereiches um einen gegenwärtig angezielten Punkt aufzunehmen, wobei durch das Entfernungsmessgerät auf dem angezielten Punkt ein sichtbarer bzw. von der Bilderfassungseinheit erfassbarer Punkt erzeugbar ist. Diese Erfassbarkeit durch die Bilderfassungseinheit kann beispielsweise durch die Verwendung eines farbigen Laserstrahles als Messstrahl gewährleistet werden, oder alternativ durch einen - zusätzlich zum den Messstrahl emittierenden Entfernungsmesseinheit am Gerät vorgesehenen - Laserpointer. Dabei nimmt die Bilderfassungseinheit wenigstens zwei Bilder in zeitlichem Zusammenhang mit jeweils einer Entfernungsmessung auf ("Zielbilder"). Unter einer Aufnahme in zeitlichem Zusammenhang mit einer Messung wird hierbei insbesondere eine zeitgleich mit oder unmittelbar vor oder nach einer Messung erfolgende Aufnahme verstanden. Durch Verknüpfung der beiden - jeweils einen der zwei angezielten Punkte abbildenden - Zielbilder mittels Feature-Extraktion wird ein Panoramabild erzeugt, auf dem beide Punkte abgebildet sind. Dazu werden Merkmale in einem aufgenommenen Bild erfasst und mit Merkmalen eines oder mehrerer weiterer Bilder abgeglichen. Dazu können die erfassten Merkmale während eines Schwenkens der Kamera durch Anzielen eines zweiten Punktes mit dem Gerät vorzugsweise verfolgt werden, insbesondere wobei kontinuierlich oder bedarfsorientiert weitere Bilder erfasst werden. Dazu kann insbesondere auch Image-Stitching zur Erzeugung des Panoramabildes verwendet werden. Jede Strecke, bzw. jeder Pixel oder Bildpunkt, des Panoramabildes entspricht dabei einem bekannten, von der Winkelauflösung der jeweiligen Kameraoptik abhängigen, Winkelsegment. Aus der Länge einer Strecke oder einer Pixelanzahl zwischen den beiden Messpunkten ist somit der Winkel zwischen den beiden Ausrichtungen des handhaltbaren Entfernungsmessgerätes beim Messen zu den zwei Punkten errechenbar.

In einer ersten Variante dieser Ausführungsform weist die Bilderfassungseinheit genau eine Kamera auf, die vorzugsweise als Fixfokus-Kamera ausgebildet ist und dazu, während eines aus zwei Entfernungsmessungen bestehenden Messvorganges eine Mehrzahl an Bildern aufzunehmen, die von der Bildauswerteeinheit zu einem Panoramabild zusammengefügt werden. Die Kamera der Bilderfassungseinheit kann sowohl eine in das Entfernungsmessmodul integrierte Kamera sein als auch eine Kamera des angeschlossenen elektronischen Geräts. Da die Bilder während einer Bewegung zwischen der ersten und der zweiten Entfernungsmessung aufgenommen werden, weist die Kamera vorzugsweise eine lichtstarke Optik mit kurzer Belichtungszeit und/oder einen Global Shutter als Blendenverschluss auf, um Verschmiereffekte zu minimieren.

Alternativ kann der Benutzer zur Bildaufnahme die Bewegung anhalten. Das Gerät kann dann dem Benutzer ein entsprechendes Signal geben, wenn die Bewegung für eine weitere Bildaufnahme angehalten werden soll. Ein solches Signal kann beispielsweise optisch, akustisch und/oder durch Vibration erfolgen, vorzugsweise bereitgestellt durch das angeschlossene elektronische Gerät. Bei schlechten Lichtverhältnissen oder wenn - wie beispielsweise auf einer ebenen weissen Wand - nicht genügend Strukturen und Merkmale verfügbar sind, um die Bilder eindeutig zusammenzufügen, können Hilfsmittel, wie beispielsweise ein Gyroskop, zur Unterstützung der Bildauswerteeinheit eingesetzt werden.

In einer zweiten Variante dieser Ausführungsform weist die Bilderfassungseinheit mehrere Kameras auf. Vorzugsweise sind diese so auf dem Entfernungsmessgerät angeordnet, dass sie bei der ersten Distanzmessung gleichzeitig ein Weitwinkelbild des gewünschten Arbeitsbereiches aufnehmen können, insbesondere in einem Winkel zwischen 50° und 150°. Ein typischer Arbeitsbereich weist beispielsweise einen Winkel von 120° auf. Befindet sich der bei der zweiten Distanzmessung angezielte Punkt im bei der ersten Messung aufgenommenen Weitwinkelbild, genügt bei der zweiten Messung eine Aufnahme eines einzigen den Zielpunkt umfassenden Bildes. Befindet sich der bei der zweiten Distanzmessung angezielte Punkt ausserhalb des bei der ersten Messung aufgenommenen Weitwinkelbildes, so wird auch als zweites Bild ein Weitwinkelbild aufgenommen. Das zweite Bild wird dann mit dem Weitwinkelbild der ersten Messung zu einem Panoramabild zusammengefügt. Damit sind beide Messpunkte in diesem Panoramabild sichtbar, und somit der Winkel berechenbar.

Die Kameras der Bilderfassungseinheit sind vorzugsweise als Wafer Scale Cameras mit Fixfokus ausgebildet, wie sie üblicherweise schon in anderen handhaltbaren Geräten wie z. B. Mobiltelefonen eingesetzt werden. Wafer Scale Cameras sind aufgrund ihrer Kompaktheit gut für den Einsatz in kleinen handhaltbaren Geräten geeignet. Zusätzlich kann das Entfernungsmessgerät über eine Zielsuch-Kamera mit einer Zoomfunktionalität verfügen, die zwar einen kleineren Blickwinkel aufweist, aber eine bessere Anzielgenauigkeit zulässt.

Das Entfernungsmessmodul kann über eine solche Zielsuch-Kamera mit Zoomfunktionalität verfügen. Beispielsweise kann auch eine Kamera einer optionalen Bilderfassungseinheit zusätzlich eine Funktion als Zielsuch-Kamera übernehmen. Vorzugsweise ist die Zielsuch-Kamera aber eine Kamera des an das Entfernungsmessmodul angeschlossenen elektronischen Gerätes.

Alternativ oder zusätzlich zu einer im Entfernungsmessmodul vorgesehenen Kamera kann das Entfernungsmessmodul über Bildumlenkmittel verfügen, die dazu ausgestaltet sind, das Kamerabild einer Kamera des elektronischen Gerätes koaxial zur Laserrichtung umzulenken, beispielsweise um diese als Zielsuchkamera zu nutzen. Dazu verfügen die Bildumlenkmittel über optische Elemente, insbesondere einen Spiegel, Linsen und/oder lichtleitende Fasern. Die Bildumlenkmittel sind bevorzugt an einer durch die bekannte Position einer Kamera eines bestimmten Typs von elektronischem Gerät definierten Stelle des Entfernungsmessmoduls angeordnet. Sie können auch beweglich angeordnet sein, beispielsweise um mit verschiedenen Typen von elektronischen Geräten verwendbar zu sein, oder um aus einer im Gehäuse des Entfernungsmessmoduls integrierten Position in eine Position vor der Kamera zu wechseln.

In einer alternativen Ausführungsform werden im Entfernungsmessmodul Umlenkmittel zum Umlenken des Laserstrahles bereitgestellt. Insbesondere kann so der Laserstrahl parallel zur Aufnahmerichtung einer Kamera des elektronischen Gerätes ausgerichtet werden. Vorzugsweise können die weiter oben beschriebenen Bildumlenkmittel wahlweise sowohl zur Umlenkung eines Kamerabildes als auch zur Umlenkung des Laserstrahles verwendbar sein.

In einer bevorzugten Ausführungsform kann eine Kamera des Distanzmessmoduls oder eines angeschlossenen elektronischen Gerätes auf ein Referenzziel ausgerichtet werden, während Messungen zu mehreren Zielpunkten durchgeführt werden. Das Referenzziel weist eine Vielzahl an von der Kamera erkennbaren Referenzpunkten auf, durch deren Lage im aufgenommenen Bild eine eindeutige relative Lage und Position des Entfernungsmessgerätes zum Referenzobjekt ableitbar ist. Dadurch werden auch dreidimensionale Koordinaten der Zielpunkte relativ zum Referenzobjekt errechenbar. Im Falle einer Dauermessung wird so ein freihändiges Scannen ermöglicht.

In einer weiteren Ausführungsform weist das Entfernungsmessmodul eine Referenzierungsstütze, mit welcher Winkel und Ausrichtungsänderungen des Entfernungsmessgerätes relativ zu einem externen Referenzobjekt bestimmt werden können. Die räumliche Ausrichtung des Entfernungsmessmoduls gegenüber dem Referenzobjekt ist insbesondere über Winkelmesser erfassbar. Insbesondere ist die Winkelbestimmungseinheit derart angeordnet, dass an der Referenzierungsstütze, bzw. vorzugsweise im Innern des Entfernungsmessmoduls an einer Befestigung für die Referenzierungsstütze mindestens ein Winkelencoder vorgesehen ist, der eine relative Ausrichtung des Entfernungsmessmoduls in Bezug auf die Referenzierungsstütze und/oder einen Raumwinkel zwischen zwei Ausrichtungen des Entfernungsmessgerätes erfassen kann, mindestens in der Horizontalebene, vorzugsweise auch vertikal. Eine vertikale Ausrichtung kann alternativ auch durch einen Neigungssensor ermittelt werden.

Des Weiteren können mit einer bevorzugten Ausführungsform des erfindungsgemässen Entfernungsmessmoduls vorgegebene Koordinaten relativ zum ersten Messpunkt abgesteckt und dem Benutzer signalisiert werden. Ebenso kann mittels eines optional integrierten Neigungssensors von jedem beliebigen Punkt die Lotposition angezeigt werden. Flächen von im Raum liegenden geometrischen Formen, die durch mindestens drei Messpunkte definiert werden, können automatisch berechnet werden. In ein aufgenommenes Mess-Image können vorzugsweise automatisch geometrische Formen eingepasst, und deren Abmasse ermittelt werden. Mit dem aufgenommen Mess-Image können die Messpunkte an die gewünschte Position geschoben werden, wobei die Messkoordinaten automatisch extrapoliert werden.

Gegenstand der Erfindung ist auch ein Verfahren zum Messen von Entfernungen mittels des erfindungsgemässen Messmoduls und eines handhaltbaren elektronischen Gerätes.

Das erfindungsgemässe Verfahren beginnt mit dem Zusammenfügen des erfindungsgemässen Messmoduls und eines handhaltbaren elektronischen Gerätes, beispielsweise eines Smartphones, zu einem erfindungsgemässen Entfernungsmessgerät mittels einer lösbaren mechanischen und elektronischen Verbindung. Vorzugsweise löst die mechanische Verbindung automatisch den Start eines Programms mit einer Messfunktionalität aus, das ein graphisches Benutzer-Interface auf einer Anzeigevorrichtung, insbesondere ausgebildet als ein Touchscreen, des Smartphones anzeigt. Alternativ wird das Programm über Eingabemittel des Smartphones durch den Benutzer gestartet. Der Benutzer zielt mit dem zusammengefügten Entfernungsmessgerät einen Zielpunkt an und startet über eine Benutzereingabe auf dem Smartphone den Messvorgang. Das Signal zum Messen des Startvorganges wird zur Laserentfernungsmesseinheit des Entfernungsmessmoduls geleitet. Dieser sendet einen Laserstrahl entlang einer Emissionsachse auf den angezielten Punkt aus, und empfängt von diesem reflektierte Strahlen. Aus der Zeitdifferenz zwischen Aussenden und Empfangen wird ein Distanzwert abgeleitet. Dieser wird auf der Anzeigevorrichtung dem Benutzer angezeigt.

Vorzugsweise wird dem Benutzer ein Bild des Messbereiches auf der Anzeigevorrichtung angezeigt. Dabei kann das Bild sowohl das einer Kamera des Entfernungsmessmoduls sein, als auch das einer Kamera des Smartphones. Im letzteren Fall kann das Bild durch Bildumlenkmittel des Entfernungsmessmoduls, zum Beispiel mit einem Spiegel, in die richtige Richtung umgelenkt werden.

Das erfindungsgemässe Verfahren beinhaltet insbesondere auch ein Anlegen des Entfernungsmessgerätes an ein Referenzobjekt. Das Anlegen erfolgt mittels am Gehäuse des Entfernungsmessmoduls vorgesehenen Anschlagmitteln, die - beispielsweise mit einem trapezförmigen Querschnitt - so gestaltet sind, dass sie eine Referenzebene definieren, Vorzugsweise sind die Anschlagmittel am der Laserentfernungsmesseinheit gegenüberliegenden Ende des Entfernungsmessmodul angeordnet. Erfindungsgemäss sind die Anschlagmittel in einer bekannten, in einer Speichereinheit des Entfernungsmessmoduls gespeicherten, räumlichen Beziehung zur Laserentfernungsmesseinheit, insbesondere der Empfangseinheit für den Empfang der reflektierten Strahlen, angeordnet, sodass auch die Referenzebene eine bekannte räumliche Beziehung, insbesondere eine bekannte Entfernung, zur Laserentfernungsmesseinheit aufweist. Durch Hinzufügen dieser Entfernung zum anhand des Zeitintervalls ermittelten Ergebnis der Entfernungsmessung wird die Entfernung zwischen dem Referenzobjekt und dem Zielpunkt ermittelt. Diese wird dem Benutzer auf der Anzeigevorrichtung angezeigt.

Gegenstand der Erfindung ist auch ein Computerprogrammprodukt mit Programmcode, der auf einem maschinenlesbaren Träger eines elektronischen Gerätes gespeichert ist, zur Ausführung eines Verfahrens zum Messen einer Entfernung mittels eines erfindungsgemässen Entfernungsmessmoduls und Anzeigen der gemessenen Entfernung auf einem Display des elektronischen Gerätes, insbesondere wenn das Programm auf einer als Recheneinheit des elektronischen Gerätes ausgebildeten elektronischen Datenverarbeitungseinheit ausgeführt wird.

Vorzugsweise ist das Computerprogramm auf einer Speichereinheit des Entfernungsmessmoduls gespeichert. Bei Herstellen einer Datenverbindung mit einem elektronischen Gerät kann das Computerprogramm automatisch oder durch Benutzeranforderung in einen Speicher des elektronischen Geräts kopiert werden, oder die Speichereinheit ist so gestaltet, dass ein Zugriff auf das Computerprogramm durch eine Recheneinheit des elektronischen Gerätes zugelassen wird.

Alternativ kann das Computerprogramm auch auf externen Speichern, beispielsweise ausgestaltet als CD-ROM oder als Speicherkarte, oder auf einem Server und über das Internet herunterladbar bereitgestellt werden. In diesem Fall muss das Programm zunächst auf dem elektronischen Gerät installiert werden, bevor dieses zur Steuerung des Entfernungsmessmoduls verwendet werden kann.

In einer bevorzugten Ausführungsform ist das Computerprogrammprodukt auch zur Ausführung eines Verfahrens zum Berechnen eines Winkels zwischen zwei Emissionsrichtungen geeignet. Dabei kann insbesondere auch aus zwei gemessenen Entfernungen und einem berechneten Winkel ein Spannmass ermittelt werden.

Vorzugsweise weist das Entfernungsmessmodul eine nach Verbindung mit einem elektronischen Gerät automatisch ablaufende Codeabfragefunktionalität auf. Dafür ist eine Speichereinheit des Entfernungsmessmoduls dazu ausgestaltet, einen Code zu speichern, mit welchem ein Benutzer sich identifizieren kann. Dies kann insbesondere als Diebstahlsicherung dienen oder ggf. auch zur Erkennung eines von mehreren autorisierten Benutzern. Nach einer Verbindung des Entfernungsmessmoduls mit einem elektronischen Gerät wird die Codeabfragefunktionalität durchgeführt, in deren Rahmen insbesondere ein werksseitig voreingestellter oder benutzerdefinierter Code einzugeben ist. Der Code kann insbesondere einen Zahlencode oder ein Passwort sein. Alternativ kann mittels einer Kamera des elektronischen Gerätes ein zweidimensionales Muster erfasst und mit einem gespeicherten Muster verglichen werden. Dieses Muster kann insbesondere ein Barcode sein oder das Gesicht des Eigentümers oder eines anderen autorisierten Benutzers des Entfernungsmessmoduls.

Das erfindungsgemässe handhaltbare Entfernungsmessgerät und das erfindungsgemässe Messverfahren werden nachfolgend anhand von in den Zeichnungen schematisch dargestellten konkreten Ausführungsbeispielen rein beispielhaft näher beschrieben, wobei auch auf weitere Vorteile der Erfindung eingegangen wird. Im Einzelnen zeigen:
- Fig. 1a: ein aus dem Stand der Technik bekanntes handhaltbares Entfernungsmessgerät mit einem Laserdistanzmesser;
- Fig. 2a: eine erste beispielhafte Ausführungsform eines erfindungsgemässen Entfernungsmessmoduls;
- Fig. 2b: ein Entfernungsmessgerät mit dem Entfernungsmessmodul aus Fig. 2a und einem handhaltbaren elektronischen Gerät;
- Fig. 3: das Zusammenfügen eines beispielhaften erfindungsgemässen Entfernungsmessgerätes aus einem Entfernungsmessmodul und einem Smartphone;
- Fig. 4: das Entfernungsmessgerät aus Fig. 3 in einer Frontansicht und einer Rückansicht;
- Fig. 5: eine beispielhafte Ausführungsform eines erfindungsgemässen Entfernungsmessgerätes;
- Fig. 6a: eine weitere beispielhafte Ausführungsform eines erfindungsgemässen Entfernungsmessmoduls;
- Fig. 6b: ein Entfernungsmessgerät mit dem Entfernungsmessmodul aus Fig. 6a und einem handhaltbaren elektronischen Gerät;
- Fig. 7: eine erste Ausführungsform eines erfindungsgemässen handhaltbaren Entfernungsmessgerätes in einer Längsschnittansicht;
- Fig. 8a-b: eine zweite Ausführungsform eines erfindungsgemässen handhaltbaren Entfernungsmessgerätes in einer Längsschnittansicht; und
- Fig. 9a-b: ein erfindungsgemässes Entfernungsmessgerät beim Messen von Entfernungen und gleichzeitigem Aufnehmen von Zielbildern zur Winkelbestimmung.

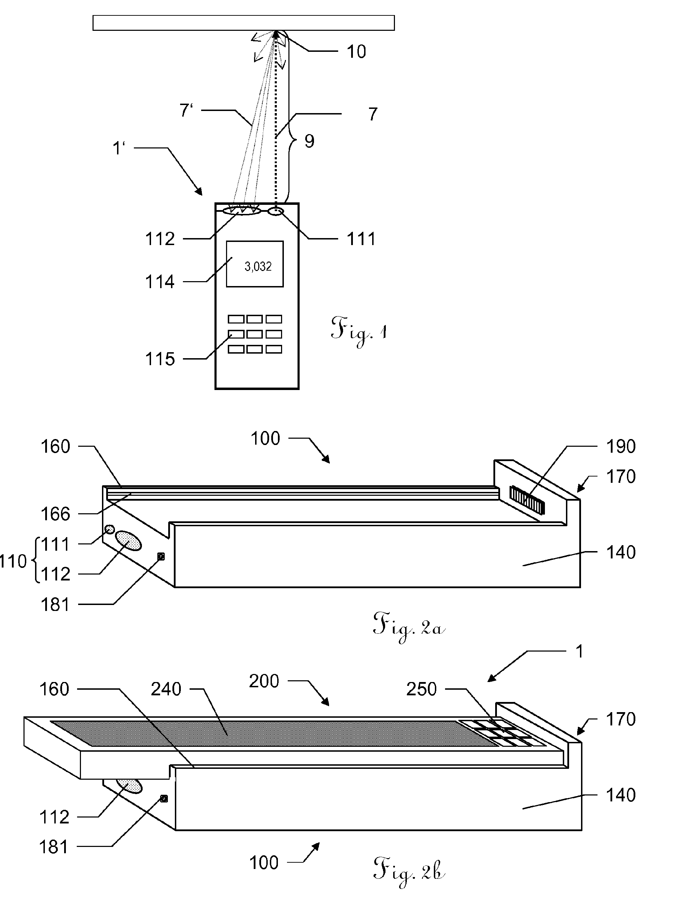

In Figur 1 ist ein aus dem Stand der Technik bekanntes handhaltbares Entfernungsmessgerät 1' zum Vermessen von Entfernungen in einer Aussenansicht dargestellt. Es weist ein Gehäuse auf, in dem die notwendigen elektronischen Komponenten angeordnet sind. Das Gehäuse ist dabei so ausgebildet, dass das Entfernungsmessgerät 1' in der Hand gehalten und auch an einem zu vermessenden Punkt definiert angelegt oder angeschlagen werden kann. Am Gehäuse können zu diesem Zweck entsprechende Anlagekanten oder ausklappbare oder aufsteckbare Anschlagelemente angebracht sein, wie sie beispielsweise in der WO 02/50564 beschrieben werden. Das Entfernungsmessgerät 1' beinhaltet an seiner Vorderseite eine Laserentfernungsmesseinheit 110 mit einer Laseraussendeeinheit 111 und einer Laserempfangseinheit 112, die über optische Öffnungen im Gehäuse verfügen. Auf der Oberseite des Geräts befinden sich eine Anzeigevorrichtung 114 in Form eines Displays und Eingabemittel 115 in Form eines Tastenfeldes. Ausserdem kann eine - hier nicht dargestellte - Zielsuch-Kamera mit einer Zoomfunktionalität zur Aufnahme von auf der Anzeigevorrichtung 114 anzeigbaren Bildern in Richtung der Emissionsrichtung vorgesehen sein.

Erfindungsgemäss sendet die Laseraussendeeinheit 111 einen Laserstrahl 7 zu einem Messpunkt 10 auf einer Wand aus. Die Wand weist eine natürlich rauhe Oberfläche auf, von der optische Strahlen streuend reflektiert werden. Ein Teil der gestreut reflektierten Strahlen 7' des Laserstrahls 7 wird von der Laserempfangseinheit 112 eingesammelt, detektiert und in ein elektrisches Signal umgewandelt. Das Signal wird in an sich bekannter Weise zum Bestimmen des digitalen Werts der Distanz 9 von einer elektronischen Schaltung ausgewertet. Zur Entfernungsermittlung kann z. B. Phasen- oder Laufzeitmessung eingesetzt werden. Dabei wird auch die Erstreckung zwischen der Laserempfangseinheit 112 und einem Messanschlag berücksichtigt. Der durch die Auswertung digital bestimmte Wert der gemessenen Entfernung 9 wird dann durch die Anzeigevorrichtung 114 einem Benutzer zur Verfügung gestellt.

In Figur 2a ist eine erste beispielhafte Ausführungsform eines erfindungsgemässen Entfernungsmessmoduls 100 dargestellt. Wie das in Figur 1 dargestellte Entfernungsmessgerät 1' weist es an seiner Vorderseite eine Laserentfernungsmesseinheit 110 mit einer Laseraussendeeinheit 111 und einer Laserempfangseinheit 112 auf, die über optische Öffnungen im Gehäuse 140 verfügen und mittels welcher auf die beschriebene Art und Weise Distanzen zu Messpunkten ermittelbar sind. Im Gegensatz zum in Figur 1 dargestellte Entfernungsmessgerät 1' weist das Entfernungsmessmodul 100 erfindungsgemäss kein Benutzer-Interface, also weder eine Anzeigevorrichtung noch Eingabemittel auf. Stattdessen verfügt das Entfernungsmessmodul 100 über einen Schnittstellen-Stecker 190, der zur Bildung einer elektronischen Steckverbindung mit einer Schnittstelle eines handhaltbaren elektronischen Gerätes (nicht dargestellt) ausgestaltet ist. Insbesondere kann der Schnittstellen-Stecker 190 ein USB-Stecker (bzw. ein Minioder Mikro-USB-Stecker) oder ein 30-poliger Stecker sein. Das Entfernungsmessmodul 100 verfügt ausserdem über Befestigungsmittel 160 zur temporären Aufnahme und Befestigung eines bestimmten Typs elektronischen Gerätes mit bekannten definierten Ausmassen. Die Befestigungsmittel 160 können, wie hier dargestellt, beispielsweise über eine Schiene 166 zum Eingreifen in eine Rille des elektronischen Gerätes verfügen. Erfindungsgemäss sind am hinteren Teil des Gehäuses 140 Anschlagmittel 170 derart gestaltet, dass in einer definierten, bekannten räumlichen Beziehung zur Laserentfernungsmesseinheit 110, insbesondere zur Laserempfangseinheit 112 durch die äussere Gestalt der Anschlagmittel 170 eine Referenzebene definiert ist, die zum Anlegen an ein Objekt bei der Durchführung einer Messung vorgesehen ist. Des weiteren weist das Entfernungsmessmodul 100 eine Kamera 181 zum Aufnehmen von Bildern in Richtung der Entfernungsmessung auf.

Figur 2b zeigt ein erfindungsgemässes Entfernungsmessgerät 1, zusammengesetzt aus dem in Figur 2a gezeigten Entfernungsmessmodul 100 und einem handhaltbaren elektronischen Gerät 200. Das handhaltbare elektronische Gerät 200, das insbesondere ein Smartphone oder ein Tablett-Computer sein kann, weist ein Benutzer-Interface mit einer Anzeigevorrichtung 240 in Form eines Displays und Eingabemitteln 250 in Form eines Tastenfeldes auf. Selbstverständlich können Anzeigevorrichtung 240 und Eingabemittel 250 auch als ein berührungssensitiver Touchscreen ausgestaltet sein. Das handhaltbare elektronische Gerät 200 ist von seinen Ausmassen an die Befestigungsmittel 160 angepasst und wird durch diese, flach am Entfernungsmessmodul 100 anliegend, positionsgetreu mit diesem verbunden. Eine Schnittstelle (nicht dargestellt) des handhaltbaren elektronischen Gerätes 200 bildet eine elektronische Steckverbindung mit dem Schnittstellen-Stecker des Entfernungsmessmoduls 100. Dabei können Daten dergestalt zwischen den beiden Komponenten des Entfernungsmessgerätes 1 ausgetauscht werden, dass ein Benutzer mittels der Eingabemittel 250 des elektronischen Gerätes 200 eine Messung der Laserentfernungsmesseinheit 110 des Entfernungsmessmoduls 100 auslösen kann und ihm die Messdaten auf der Anzeigevorrichtung 240 des elektronischen Gerätes 200 angezeigt werden.

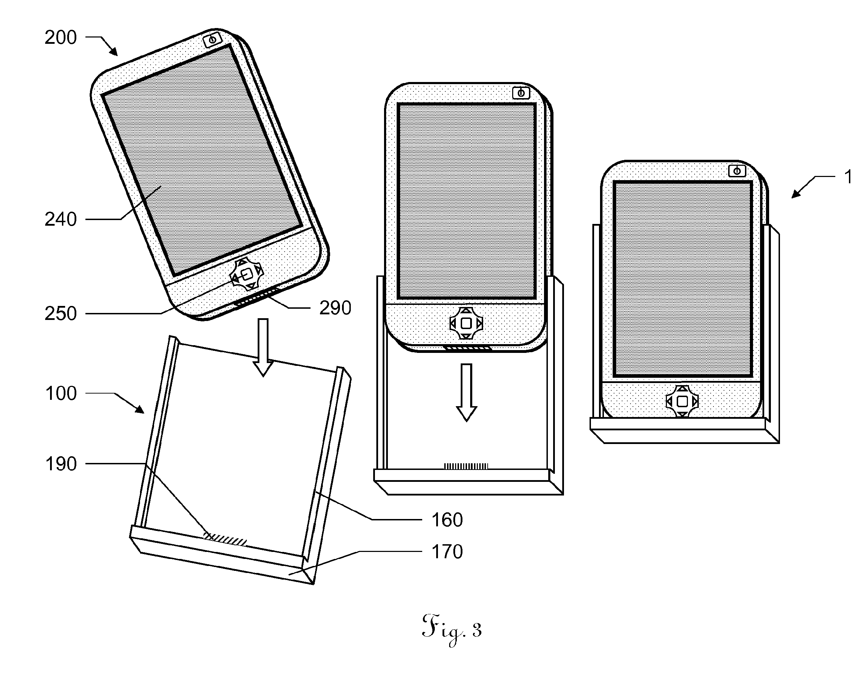

In Figur 3 ist das Zusammensetzen eines erfindungsgemässen Entfernungsmessgerätes 1 schematisch dargestellt. Das Entfernungsmessmodul 100, seine Befestigungsmittel 160 und sein Schnittstellen-Stecker 190 sind so dimensioniert, angeordnet und ausgestaltet, dass das als ein Smartphone 200 ausgestaltete elektronische Gerät so mit dem Entfernungsmessmodul 100 verbindbar ist, dass der Schnittstellen-Stecker 190 mit der Schnittstelle 290 des Smartphones 200 eine zur Datenübertragung geeignete elektronische Steckverbindung bildet. Hier beispielhaft dargestellt ist eine Verbindung durch Einschieben des Smartphones 200 in die Befestigungsmittel 160.

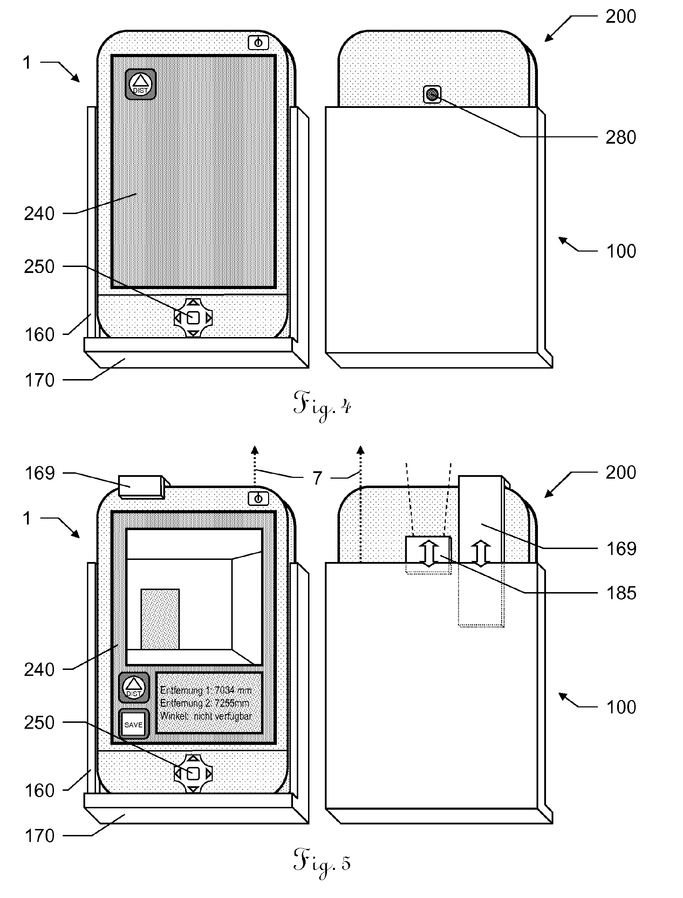

In Figur 4 ist das in Figur 3 zusammengesetzte Entfernungsmessgerät 1 in einer Front- und einer Rückansicht dargestellt.

Figur 5 zeigt eine weitere Ausführungsform des erfindungsgemässen Entfernungsmessgerätes 1. Zusätzlich zu dem in Figur 4 gezeigten, weist das hier dargestellte Entfernungsmessmodul 100 einen Riegel 169 zum Fixieren des Smartphones 200 in den seitlichen Befestigungsmitteln 160 auf. Der Riegel 169 ist beweglich, einerseits um ein einfaches Einlegen des Smartphones 200 zu ermöglichen und andererseits um das Smartphone 200 in einer definierten Position zum Entfernungsmessmodul 100 fixieren zu können. Ausserdem weist das hier dargestellte Entfernungsmessmodul 100 Bildumlenkmittel 185 zum Umlenken des Bildes der Kamera 280 des Smartphones 200 (siehe Figur 4) parallel zur Emissionsrichtung des Laserstrahles 7 auf. Sowohl der Riegel 169 als auch die Bildumlenkmittel 185 sind bevorzugt motorisiert beweglich.

Auf der als Touchscreen ausgebildeten Anzeigevorrichtung 240 ist rein beispielhaft ein graphisches Benutzer-Interface abgebildet, das ein von der Kamera 280 aufgenommenes und durch die Bildumlenkmittel 185 auf dem Messbereich gelenktes Bild beinhaltet.

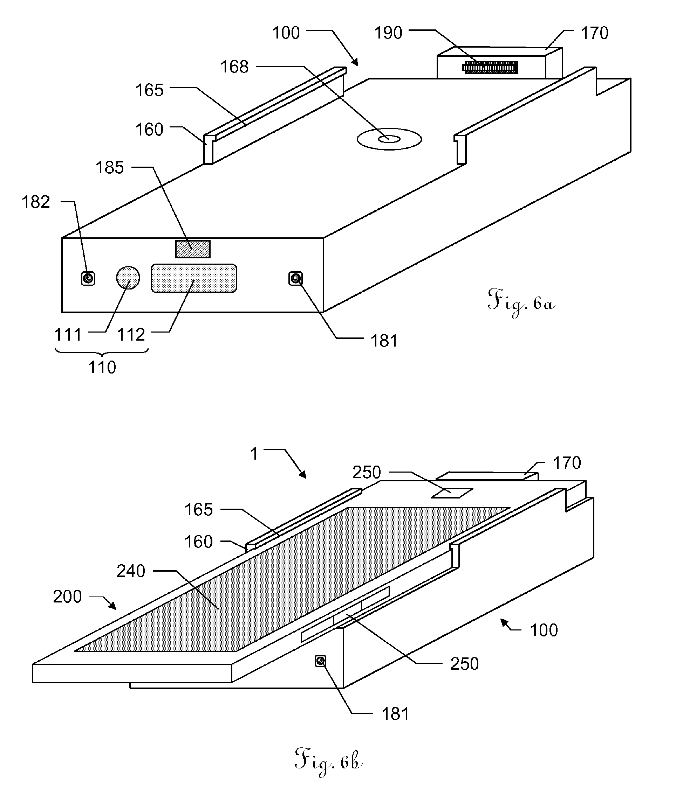

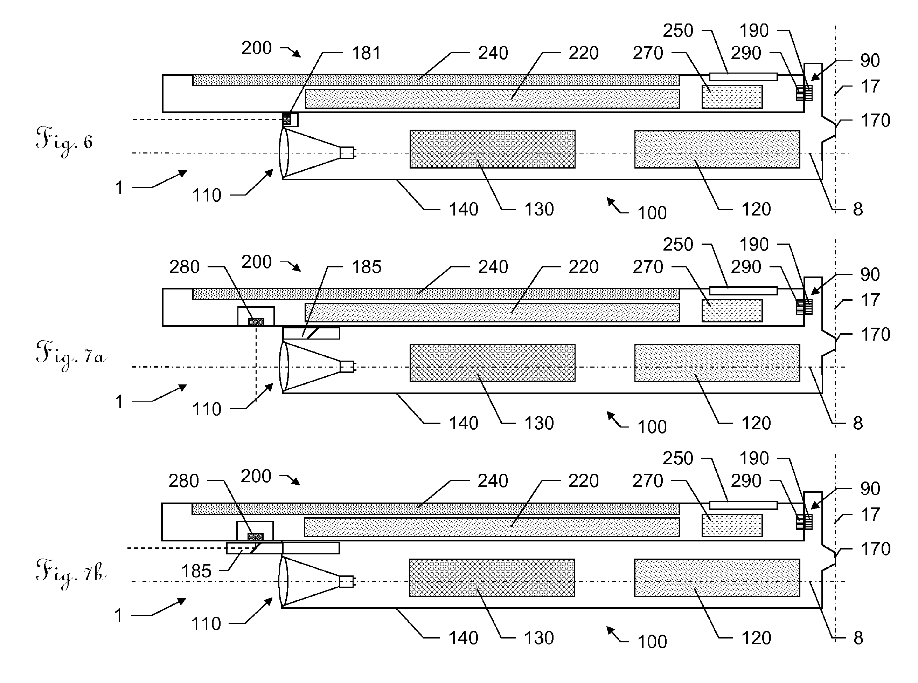

Figur 6a zeigt eine dritte Ausführungsform des erfindungsgemässen Entfernungsmessmoduls 100. Das Entfernungsmessmodul 100 weist an seiner Vorderseite eine Laserentfernungsmesseinheit 110 mit einer Laseraussendeeinheit 111 und einer Laserempfangseinheit 112 auf, darüber hinaus eine erste Kamera 181 und eine zweite Kamera 182, sowie ausfahrbare Bildumlenkmittel 185. Letztere sind an einer auf einen bestimmten Typ elektronischen Gerätes abgestimmten Stelle positioniert, um sich im ausgefahrenen Zustand vor einer Kamera des elektronischen Gerätes zu befinden, die dazu ausgestaltet ist, Bilder orthogonal zur Emissionsrichtung des Laserstrahls aufzunehmen. Mittels optischer Elemente, insbesondere Spiegeln, Linsen, Prismen und/oder lichtleitenden Fasern sind die Bildumlenkmittel 185 zur Umlenkung des Bildes der Kamera, insbesondere koaxial zur Emissionsrichtung, ausgestaltet. Des weiteren sind Befestigungsmittel 160 zur Aufnahme und Fixierung des elektronischen Gerätes und ein Schnittstellen-Stecker 190 vorhanden.

Die Befestigungsmittel 160 weisen zwei Leisten 165 zum seitlichen Umfassen des elektronischen Gerätes auf, ausserdem Arretierungsmittel in Form eines Saugnapfes 168. Letzterer dient zum positionstreuen Fixieren des elektronischen Gerätes am Entfernungsmessmodul 100. Insbesondere kann der Saugnapf 168 mit einer elektrisch betriebenen Pumpe versehen sein, die beispielsweise bei Zustandekommen einer Datenverbindung zwischen dem Entfernungsmessmodul 100 und dem elektronischen Gerät automatisch das elektronische Gerät mittels Unterdruck fixiert. Am der Laserentfernungsmesseinheit 110 gegenüberliegenden Ende des Entfernungsmessmoduls 100 sind Anschlagmittel 170 vorgesehen, die derart gestaltet sind, dass in einer definierten, bekannten räumlichen Beziehung zur Laserentfernungsmesseinheit 110, insbesondere zur Laserempfangseinheit 112 durch die äussere Gestalt der Anschlagmittel 170 eine Referenzebene definiert ist, die zum Anlegen an ein Objekt bei der Durchführung einer Messung vorgesehen ist. Die Anschlagmittel 170 können insbesondere Detektoren aufweisen, die erkennen können, ob die Anschlagmittel 170 bei einer Messung an ein Objekt angelegt sind.

Figur 6b zeigt ein erfindungsgemässes Entfernungsmessgerät 1, zusammengesetzt aus dem in Figur 6a gezeigten Entfernungsmessmodul 100 und einem als Smartphone 200 ausgestaltetem handhaltbaren elektronischen Gerät. Das Smartphone 200 weist eine als Touchscreen 240 ausgestaltete Anzeigevorrichtung sowie als Druckschalter 250 ausgestaltete Eingabemittel. Es wird einerseits durch die seitlichen Befestigungsmittel 160 mit den das Smartphone 200 umgreifenden Leisten 165 und andererseits durch die elektronische Steckverbindung der Schnittstelle des Smartphones 200 mit dem Schnittstellen-Stecker 190 des Entfernungsmessmoduls 100 eindeutig zum Entfernungsmessmodul 100 ausgerichtet. Der in Figur 6a gezeigte Saugnapf 168 fixiert das Smartphone 200 in dieser Position.

Figur 7 stellt einen Längsschnitt durch ein erfindungsgemässes handhaltbares Entfernungsmessgerät 1, bestehend aus dem Entfernungsmessmodul 100 und dem handhaltbaren elektronischen Gerät 200, dar.

Das Entfernungsmessmodul 100 beinhaltet eine Laserentfernungsmesseinheit 110 mit einem entlang der Emissionsachse 8 ausgesendeten Laserstrahl 7. Als interne Komponenten des Entfernungsmessmoduls 100 sind eine Speicher- und Auswertekomponente 120 und eine interne Energieversorgungseinheit 130 gezeigt. Die Energieversorgungseinheit 130 umfasst insbesondere eine Batterie oder einen Akku, und stellt die elektrische Energie für die elektrisch betriebenen Komponenten des Entfernungsmessmoduls 100 bereit. Vorzugsweise ist ein Anschluss für eine externe Stromversorgung vorhanden, entweder zum Laden eines Akkus oder zum Betrieb des Entfernungsmessgerätes 1.

Das elektronische Gerät 200, insbesondere ein Smartphone oder ein Tablett-Computer, ist durch (hier nicht dargestellte) Befestigungsmittel des Entfernungsmessmoduls 100 fest mit diesem verbunden.

Eine Schnittstelle 290 bildet mit dem Schnittstellen-Stecker 190 eine elektronische Steckverbindung 90 zur Übertragung von Daten. Vorzugsweise kann die elektronische Steckverbindung 90 auch zur Übertragung elektrischer Energie ausgestaltet sein, sodass die interne Energieversorgungseinheit 130 des Entfernungsmessmoduls 100 zur Stromversorgung des elektronischen Geräts 200 verwendbar ist, oder das Entfernungsmessmodul 100 durch das elektronische Gerät 200 mit Strom versorgbar ist.

Das elektronische Gerät 200 weist ein Benutzer-Interface mit einer Anzeigevorrichtung 240 in Form eines Displays und Eingabemittel 250 in Form eines Tastenfeldes auf. Das Display kann insbesondere als ein Touchscreen ausgestaltet sein und somit ebenfalls Eingabemittel 250 darstellen. Das elektronische Gerät ist ausserdem mit einer Recheneinheit 220 und einer Sensoreinheit 270 ausgestattet. Die Sensoreinheit 270 beinhaltet insbesondere einen Neigungssensor, einen Kompass und/oder ein Gyroskop.

Ein digital vorliegender Entfernungswert kann - wie bei optisch gemessenen Distanzen heute üblich - von der Speicher- und Auswertekomponente 120 des Entfernungsmessmoduls 100 und/oder der Recheneinheit 220 des elektronischen Gerätes 200 gespeichert, weiterverarbeitet oder übertragen und auf der Anzeigevorrichtung 240 einem Benutzer angezeigt werden.

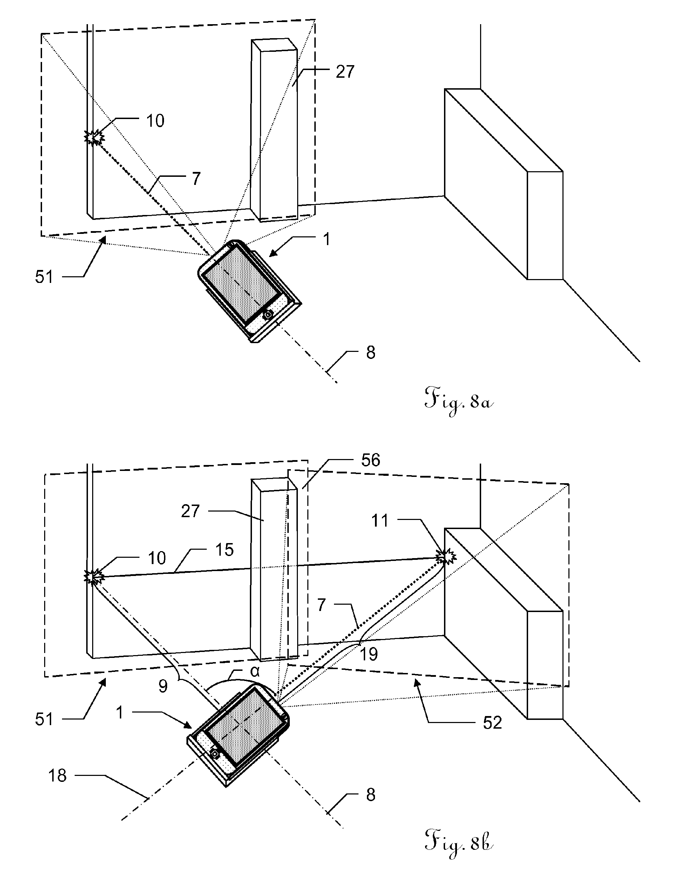

Die Figuren 8a und 8b zeigen eine weitere Ausführungsform des erfindungsgemässen Entfernungsmessgerätes 1. Diese unterscheidet sich von der in Figur 7 gezeigten dadurch, dass das handhaltbare elektronische Gerät 200 eine Kamera 280 aufweist, und dass das Entfernungsmessmodul statt einer Kamera 181 Bildumlenkmittel 185 aufweist. Diese Bildumlenkmittel 185 sind derart positioniert und gestaltet, dass sie bei Kombination des Entfernungsmessmoduls 100 mit einem bestimmten Typ eines elektronischen Gerätes 200 mit bekannten Ausmassen eine der Kamera 280 des elektronischen Gerätes 200 entsprechende Position einnehmen oder einzunehmen geeignet sind.

Die in diesen Figuren dargestellten Bildumlenkmittel 185 sind zu diesem Zweck ausfahrbar gestaltet. In Figur 8a sind sie im eingefahrenen Zustand dargestellt, sodass die Kamera 280 im wesentlichen orthogonal zur Emissionsachse 8 Bilder aufnimmt. In Figur 8b sind die Bildumlenkmittel 185 ausgefahren und nehmen eine Position ein, in welcher sie mittels optischer Elemente, insbesondere Spiegeln, Linsen, Prismen und/oder lichtleitenden Fasern Bilder der Kamera 280, insbesondere koaxial zur Emissionsachse 8 umlenken, sodass die Kamera 280 des elektronischen Gerätes 200 Bilder des Messbereiches aufnehmen kann. Insbesondere können die Bildumlenkmittel 185 derart gestaltet sein, dass sie bei Einschalten der Kamera 280 automatisch und motorisiert ihre Bildumlenkposition einnehmen und bei Ausschalten der Kamera 280 automatisch wieder in eine geschützte Position zurückfahren. In einer alternativen Ausführungsform sind die Bildumlenkmittel 185 alternativ oder zusätzlich dazu ausgestaltet, den Laserstrahl 7 umzulenken, insbesondere parallel zur Aufnahmerichtung einer Kamera 280 des elektronischen Gerätes.

In den Figuren 9a und 9b wird ein Verfahren illustriert, mittels dessen mit einem erfindungsgemässen Entfernungsmessgerät 1 die Länge einer Strecke 15 zwischen zwei entfernten Messpunkten 10,11 auf einer Oberfläche ermittelt werden kann, zum Beispiel wenn - wie hier dargestellt - ein Hindernis 27 eine direkte Messung von einem ersten Punkt 10 zu einem zweiten Punkt 11 verhindert. Die Grundlagen des Verfahrens sind in der Europäischen Patentanmeldung mit dem Aktenzeichen EP 12169729 beschrieben. Das erfindungsgemässe Entfernungsmessmodul weist zur Ausführung des Verfahrens eine Bilderfassungseinheit mit mindestens einer, vorzugsweise mehreren Kameras auf oder Bildumlenkungsmittel zum Umlenken des Bildes mindestens einer Kamera des elektronischen Gerätes. Ausserdem ist eine Speicher- und Auswertekomponente des Entfernungsmessgerätes 1 als Bildauswerteeinheit ausgeführt.

In Figur 9a ist ein erfindungsgemässes handhaltbares Entfernungsmessgerät 1 beim Messen der Entfernung 9 zu dem ersten Messpunkt 10 dargestellt. Der Benutzer richtet das Entfernungsmessgerät 1 mittels des sichtbaren Laserstrahles 7 auf den zu vermessenden Punkt 10 an der Wand aus und startet den Messvorgang über Eingabemittel des elektronischen Gerätes 200. Die Laserentfernungsmesseinheit des Entfernungsmessmoduls 100 erfasst die Entfernung 9 zum Messpunkt 10; diese wird von einer Recheneinheit des Messgerätes 1 gespeichert. Gleichzeitig nimmt eine Kamera der Bilderfassungseinheit 180 ein erstes Zielbild 51 von der Messumgebung auf. Dieses wird von der Bildauswerteeinheit gespeichert.

In Figur 9b ist das handhaltbare Entfernungsmessgerät 1 beim Messen zu dem zweiten Messpunkt 11 dargestellt. Der Benutzer richtet das Gerät 1 mittels des sichtbaren Laserstrahles 7 auf einen weiteren zu vermessenden Punkt 11 an der Wand aus und startet den zweiten Messvorgang. Die Laserentfernungsmesseinheit erfasst die Entfernung 19 zum zweiten Punkt 11, die von der Auswerteeinheit gespeichert wird. Gleichzeitig nimmt eine Kamera der Bilderfassungseinheit 180 ein zweites Zielbild 52 von der Messumgebung auf, wobei das erste und das zweite Zielbild einen sich überschneidenden gemeinsamen Bildbereich aufweisen 56.

Dieser gemeinsame Bildbereich 56 wird von der Bildauswerteeinheit dazu verwendet, das erste Zielbild 51 und das zweite Zielbild 52 durch Feature-Extraktion zueinander in Beziehung zu setzen, insbesondere mittels Image-Stitching miteinander zu einem Panoramabild zu verknüpfen. Dazu muss der gemeinsame Bildbereich 56 erfassbare Strukturen oder sonstige Merkmale aufweisen. In diesem Beispiel sind Teile des Hindernisses 27 als erfassbares Merkmal vorhanden.

Die Zielbilder 51,52 sind aus Bildpunkten, insbesondere Pixeln zusammengesetzt. Je nach Optik der Kamera steht jeder Pixel für ein Winkelsegment. Durch Kenntnis der Kameraoptik des Gerätes ist auch die Grösse dieses Winkelsegmentes bekannt und in einem Speicher der Bildauswerteeinheit hinterlegt.

Aus den zueinander in Beziehung gesetzten Bildern, bzw. aus dem zusammengesetzten Panoramabild, kann daher durch Ermitteln der Anzahl an Pixeln zwischen den beiden Messpunkten 10,11 der Winkel α zwischen der ersten Emissionsachse 8 und der zweiten Emissionsachse 18 errechnet werden. Mittels Triangulation, insbesondere mittels des Kosinussatzes, kann nun aus den gemessenen Entfernungen 9,19 und dem Winkel α die Distanz 15 zwischen den beiden Punkten 10,11 errechnet werden.

Es versteht sich, dass diese dargestellten Figuren nur mögliche Ausführungsbeispiele schematisch darstellen. Die verschiedenen Ansätze können ebenso miteinander wie mit Verfahren und Geräten des Standes der Technik kombiniert werden.

## Patentansprüche

1. Entfernungsmessmodul (100) zur Verbindung mit einem
• definierte, bekannte Ausmasse,
• ein Benutzer-Interface und
• eine Schnittstelle (290) zur Datenübertragung aufweisenden, handhaltbaren elektronischen Gerät (200), insbesondere einem Smartphone oder Tablett-Computer, zu einem handhaltbaren Entfernungsmessgerät (1),
wobei das Entfernungsmessmodul (100) mindestens aufweist
• eine Laserentfernungsmesseinheit (110) zur Messung einer Distanz (9) zu einem Zielpunkt (10) mittels eines entlang einer Emissionsachse (8) ausgesendeten Laserstrahls (7),
• eine Speicher- und Auswertekomponente (120),
• eine interne Energieversorgungseinheit (130) und
• ein Gehäuse (140),
**gekennzeichnet durch**
• einen Schnittstellen-Stecker (190) ausgestaltet zur Verbindung mit der Schnittstelle (290),
• Befestigungsmittel (160) zur Aufnahme des handhaltbaren elektronischen Gerätes (200) und
• Anschlagmittel (170) zur Referenzierung des Gehäuses (140) an einem externen Objekt,
wobei
• die Befestigungsmittel (160) und der Schnittstellen-Stecker (190) derart ausgestaltet und angeordnet sind, dass
■ im Rahmen der Aufnahme des handhaltbaren elektronischen Gerätes (200) der Schnittstellen-Stecker (190) und die Schnittstelle (290) mechanisch verbindbar sind, sodass eine elektronische Steckverbindung (90) zur Übertragung von Daten zwischen dem Entfernungsmessmodul (100) und dem handhaltbaren elektronischen Gerät (200) erzeugbar ist, und
■ als eine Folge der Aufnahme das handhaltbare elektronische Gerät (200), am Gehäuse (140) des Entfernungsmessmoduls (100) anliegend, das Gehäuse (140) im wesentlichen positionsfest kontaktiert, und
• die Anschlagmittel (170) zum Anlegen an ein Objekt bei der Durchführung einer Messung vorgesehen sind und derart gestaltet sind, dass in einer bekannten, definierten räumlichen Beziehung zur Laserentfernungsmesseinheit (110) **durch** die äussere Gestalt der Anschlagmittel (170) eine Referenzebene (17) definiert ist, wobei Daten über die räumliche Beziehung in der Speicher- und Auswertekomponente (120) gespeichert sind.

2. Entfernungsmessmodul (100) nach Anspruch 1,
**dadurch gekennzeichnet, dass**
das Entfernungsmessmodul (100) anzeigevorrichtungsfrei und eingabemittelfrei ist.

3. Entfernungsmessmodul (100) nach Anspruch 1 oder Anspruch 2,
**dadurch gekennzeichnet, dass**
die Befestigungsmittel (160) aufweisen
• eine Einschubvorrichtung zum Einschieben des elektronischen Gerätes (200), aufweisend zwei Leisten (165) zum seitlichen Umgreifen des elektronischen Gerätes (200) und/oder eine Schiene (166) zum Eingreifen in eine Rille (266) des elektronischen Gerätes (200),
• eine Klipsvorrichtung zum Einlegen des elektronischen Gerätes (200), und/oder
• Arretierungsmittel zum lösbaren Fixieren des elektronischen Gerätes (200) am Entfernungsmessmodul (100) nach der Aufnahme, insbesondere aufweisend einen Riegel oder einen Saugnapf (168),
und derart gestaltet sind, dass
• das Entfernungsmessmodul (100) und das elektronische Gerät (200) in einer definierten, bekannten räumlichen Beziehung zueinander positionierbar sind, und
• das Benutzer-Interface des elektronischen Gerätes (200) im wesentlichen nicht verdeckt wird.

4. Entfernungsmessmodul (100) nach einem der Ansprüche 1 bis 3,
**gekennzeichnet durch**
• mindestens eine erste Kamera (181) zur Aufnahme von Bildern, insbesondere koaxial zur Emissionsachse (8),
• Bildumlenkmittel (185) zum Umlenken des Bildes einer Kamera (280) des elektronischen Gerätes (200), insbesondere koaxial zur Emissionsachse (8), insbesondere wobei die Bildumlenkmittel (185) verfahrbar ausgestaltet sind, und/oder
• eine Bilderfassungseinheit (180), aufweisend mindestens
■ eine Kamera (181, 182) und/oder
■ Bildumlenkmittel (185) zum Umlenken des Bildes einer Kamera (280) des elektronischen Gerätes (200),
zur Erfassung einer Serie von Bildern (51-55), wobei die Serie von Bildern (51-55) Zielbilder (51, 52) umfasst, die
■ in zeitlichem Zusammenhang, insbesondere zeitgleich, mit einer Messung einer Distanz (9) zu einem Zielpunkt (10) erfasst werden, sodass sie mit dieser Distanz (9) verknüpfbar sind, und
■ eine Abbildung des Zielpunkts (10) aufweisen, wobei das Entfernungsmessmodul (100) über eine Bilderfassungsfunktionalität verfügt, im Rahmen derer die Bilderfassungseinheit (180) eine Serie von mindestens zwei Bildern erfasst, die mindestens ein erstes Zielbild (51) und ein zweites Zielbild (52) aufweist, und in der jedes der Bilder einen gemeinsamen Bildbereich (56) mit mindestens einem weiteren Bild aufweist.

5. Entfernungsmessmodul (100) nach einem der Ansprüche 1 bis 3,
**gekennzeichnet durch**
eine Winkelbestimmungseinheit (150) mit mindestens einem Winkelencoder zur Bestimmung eines Drehwinkels zwischen dem Gehäuse (140) und einer formstabilen Referenzierungsstütze (155), wobei
• **durch** die Referenzierungsstütze (155) eine Passivposition einnehmbar ist, in der sie in eine Aussparung des Gehäuses (140) eingefügt ist, flach anliegend am Gehäuse (140) befestigt ist oder räumlich vom Rest des Entfernungsmessmoduls (100) getrennt ist,
• **durch** die Referenzierungsstütze (155) eine Referenzierungsposition einnehmbar ist, in der die Referenzierungsstütze (155) mit einem ersten Ende über ein Gelenk mit dem Gehäuse (140) mindestens um eine Stehachse drehbar verbunden ist und mit einem zweiten Ende auf einem Referenzpunkt eines Referenzobjektes fixierbar ist, und
• bei einem Fixieren der Referenzierungsstütze (155) auf dem Referenzpunkt eine Lage des Gehäuses (140) zum Raum, insbesondere relativ zu dem Referenzpunkt, vollautomatisch bestimmbar ist.

6. Entfernungsmessmodul (100) nach einem der Ansprüche 1 bis 5,
**dadurch gekennzeichnet, dass**
• der Schnittstellen-Stecker (190)
■ ein 30-poliger Stecker ist,
■ ein USB-Stecker, ein Mini-USB-Stecker oder ein Mikro-USB-Stecker ist und/oder
■ auswechselbar ist,
• die elektronische Steckverbindung (90) zum Übertragen elektrischer Energie ausgestaltet ist, sodass
■ die interne Energieversorgungseinheit (130) des Entfernungsmessmoduls (100) zur Stromversorgung des elektronischen Geräts (200) verwendbar ist, und/oder
■ das Entfernungsmessmodul (100) durch das elektronische Gerät (200) mit Strom versorgbar ist, und/oder
• die interne Energieversorgungseinheit (130) aufweist
■ einen austauschbaren, aufladbaren Akkumulator,
■ eine Aufnahme für Batterien, und/oder
■ einen Anschluss für eine externe Stromversorgung.

7. Entfernungsmessmodul (100) nach einem der Ansprüche 1 bis 6,
**dadurch gekennzeichnet, dass**
die Speicher- und Auswertekomponente (120) dazu ausgestaltet ist,
• einen Code zu speichern, insbesondere einen Zahlencode, ein Passwort oder ein zweidimensionales Muster, und
• nach einer Verbindung des Entfernungsmessmoduls (100) mit dem elektronischen Gerät (200) eine Abfrage des Codes durchzuführen.

8. Handhaltbares Entfernungsmessgerät (1) umfassend ein Entfernungsmessmodul (100), insbesondere nach einem der vorangegangenen Ansprüche, und ein handhaltbares elektronisches Gerät (200), insbesondere Smartphone oder Tablett-Computer, wobei
• das Entfernungsmessmodul (100) aufweist
■ eine Laserentfernungsmesseinheit (110) zur Messung einer Distanz (9) zu einem Zielpunkt (10) mittels eines entlang einer Emissionsachse (8) ausgesendeten Laserstrahls (7),
■ eine Speicher- und Auswertekomponente (120),
■ eine Energieversorgungseinheit (130) und
■ ein Gehäuse (140), und
• das handhaltbare elektronische Gerät (200) aufweist
■ ein Gehäuse (210),
■ eine Recheneinheit (220),
■ eine Energieversorgungseinheit (230) und
■ ein Benutzer-Interface zur Auslösung einer Messung durch einen Benutzer und zur Ausgabe von Messdaten an einen Benutzer, aufweisend eine Anzeigevorrichtung (240) und Eingabemittel (250), insbesondere in Form eines Touchscreens,
**dadurch gekennzeichnet, dass**
das Entfernungsmessmodul (100)
• Befestigungsmittel (160) zur Aufnahme des handhaltbaren elektronischen Gerätes (200),
• Anschlagmittel (170) zur Referenzierung des Entfernungsmessgerätes (1) an einem externen Objekt und
• einen Schnittstellen-Stecker (190) aufweist, und das handhaltbare elektronische Gerät
• mindestens eine Sensoreinheit (270) und
• eine Schnittstelle (290)
aufweist, wobei
• die Speicher- und Auswertekomponente (120) und/oder die Recheneinheit (220) zur Ableitung und Bereitstellung der gemessenen Distanz (9) ausgestaltet sind,
• die Befestigungsmittel (160) und ein Gehäuse des handhaltbaren elektronischen Gerätes (200), sowie der Schnittstellen-Stecker (190) und die Schnittstelle (290) derart ausgestaltet und angeordnet sind, dass im Rahmen der Aufnahme des handhaltbaren elektronischen Gerätes (200) der Schnittstellen-Stecker (190) und die Schnittstelle (290) mechanisch verbindbar sind, sodass eine elektronische Steckverbindung (90) zur Übertragung von Daten zwischen dem Entfernungsmessmodul (100) und dem handhaltbaren elektronischen Gerät (200) erzeugbar ist,
• die Anschlagmittel (170) derart gestaltet sind, dass in einer definierten, bekannten räumlichen Beziehung zur Laserentfernungsmesseinheit (110) durch die äussere Gestalt der Anschlagmittel (170) eine Referenzebene (17) definiert ist, die zum Anlegen an ein Objekt bei der Durchführung einer Messung vorgesehen ist, wobei die räumliche Beziehung in der Speicher- und Auswertekomponente (120) bereitgestellt ist.

9. Handhaltbares Entfernungsmessgerät (1) nach Anspruch 8, **dadurch gekennzeichnet, dass**
• das Entfernungsmessmodul (100) mindestens eine erste Kamera (181) aufweist zur Aufnahme von Bildern des Vermessungsbereiches, insbesondere koaxial zur Emissionsachse (8), und/oder
• das handhaltbare elektronische Gerät (200) eine Kamera (280) aufweist, wobei
■ die Kamera (280) zur Aufnahme von Bildern des Vermessungsbereiches, insbesondere koaxial zur Emissionsachse (8), ausgestaltet ist, oder
■ das Entfernungsmessmodul (100) Bildumlenkmittel (185) zum Umlenken des Bildes der Kamera (280), insbesondere koaxial zur Emissionsachse (8), aufweist.

10. Handhaltbares Entfernungsmessgerät (1) nach Anspruch 9, **gekennzeichnet durch**
eine Bilderfassungseinheit (180) mit mindestens einer Kamera (181, 280), eine Bildauswerteeinheit und eine Bilderfassungs- und -auswertefunktionalität, im Rahmen derer
• die Bilderfassungseinheit (180) eine Serie von mindestens zwei Bildern erfasst, die mindestens ein erstes Zielbild (51) und ein zweites Zielbild (52) aufweist, und in der jedes der Bilder einen gemeinsamen Bildbereich (56) mit mindestens einem weiteren Bild aufweist,
• die Bildauswerteeinheit **durch** Auswertung der Bilder der Serie mittels Bildverarbeitung das erste Zielbild (51) und das zweite Zielbild (52) zueinander in Beziehung setzt, und
• die Speicher- und Auswertekomponente (120) und/oder die Recheneinheit (220) **durch** zwei zueinander in Beziehung gesetzte Zielbilder eine Distanz (15) zwischen zwei Zielpunkten (10, 11) und/oder einen Raumwinkel (α) zwischen einer ersten Emissionsachse (8) und einer zweiten Emissionsachse (18) ermittelt.

11. Verfahren zum Messen von Entfernungen mit einem handhaltbaren Entfernungsmessgerät (1), insbesondere nach einem der Ansprüche 8 bis 10, mit
• einem Anlegen von Anschlagmitteln (170) des Entfernungsmessgerätes (1) an ein Objekt,
• einem Auslösen eines Messvorganges durch eine Benutzereingabe mittels Eingabemitteln (250),
• einem Aussenden eines Laserstrahls (7) entlang einer Emissionsachse (8) auf einen Zielpunkt (10),
• einem Empfangen vom Zielpunkt (10) reflektierter Strahlen (7'),
• einem Ableiten einer Distanz (9) zwischen dem Objekt und dem Zielpunkt (10) und
• einem Anzeigen der Distanz (9) auf einer Anzeigevorrichtung (240),
wobei das handhaltbare Entfernungsmessgerät (1) aus einem ersten Teil und einem zweiten Teil besteht,
**gekennzeichnet durch**
• ein zumindest temporäres Zusammenfügen des ersten Teils und des zweiten Teils des Entfernungsmessgerätes (1) mittels einer lösbaren mechanischen und elektronischen Verbindung, wobei
■ der erste Teil ein Entfernungsmessmodul (100) ist und der zweite Teil ein handhaltbares elektronisches Gerät (200) mit einem Benutzer-Interface ist, insbesondere ein Smartphone oder Tablett-Computer,
■ eine elektronische Steckverbindung (90) zwischen dem Entfernungsmessmodul (100) und dem handhaltbaren elektronischen Gerät (200) gebildet wird,
■ die Mittel zum Aussenden des Laserstrahls (7) und zum Empfangen der reflektierten Strahlen (7') Bestandteile des Entfernungsmessmoduls (100) sind, und
■ die Eingabemittel (250) zum Auslösen des Messvorganges und die Anzeigevorrichtung (240) zum Anzeigen der Entfernung (9) Bestandteile des handhaltbaren elektronischen Gerätes (200) sind, und
• ein Übertragen von Daten über die elektronische Steckverbindung (90),
wobei das Ableiten der Distanz (9) mindestens erfolgt anhand
• eines Zeitintervalls zwischen dem Aussenden des Laserstrahls (7) und dem Empfangen der reflektierten Strahlen (7') und
• einer bekannten Entfernung zwischen einer **durch** die Anschlagmittel (170) definierten Referenzebene (17) und der Laserentfernungsmesseinheit (110).

12. Verfahren nach Anspruch 11,
**dadurch gekennzeichnet, dass**
das Zusammenfügen des Entfernungsmessmoduls (100) und des handhaltbaren elektronischen Gerätes (200)
• durch ein Einschieben des elektronischen Gerätes (200) in eine Einschubvorrichtung (160) des Entfernungsmessmoduls (100) erfolgt, und/oder
• die elektronische Steckverbindung (90) erzeugt.

13. Verfahren nach Anspruch 11 oder Anspruch 12,
**gekennzeichnet durch**
• ein Messen einer ersten Distanz (9) zu einem ersten Zielpunkt (10) **durch** Aussenden eines Laserstrahls (7) entlang einer ersten Emissionsachse (8) und
• ein Messen einer zweiten Distanz (19) zu einem zweiten Zielpunkt (11) **durch** Aussenden eines Laserstrahls (7) entlang einer zweiten Emissionsachse (18),
• ein Erfassen eines Winkels (α) zwischen der ersten Emissionsachse (8) und der zweiten Emissionsachse (18),
insbesondere wobei das Erfassen des Winkels erfolgt vermittels
• eines Neigungssensors und/oder eines Gyroskops des elektronischen Gerätes (200),
• einer Bilderfassungs- und -auswertefunktionalität, einer Bilderfassungseinheit (180) und einer Bildauswerteeinheit, und/oder
• einer Winkelbestimmungseinheit mit mindestens einem Winkelencoder zur Bestimmung eines Drehwinkels zwischen dem Entfernungsmessmodul (100) und einer formstabilen Referenzierungsstütze.

14. Computerprogrammprodukt mit Programmcode, der auf einem maschinenlesbaren Träger gespeichert ist, insbesondere zur Ausführung auf einer Recheneinheit (220) des Entfernungsmessgeräts (1) nach einem der Ansprüche 8 bis 10 ausgebildeten elektronischen Datenverarbeitungseinheit, zur Ausführung eines Verfahrens zum Messen einer Entfernung mittels eines externen Entfernungsmessmoduls (100),
**gekennzeichnet durch**
• Senden eines Trigger-Signals an eine Laserentfernungsmesseinheit (110) des externen Entfernungsmessmodul (100),
• Warten auf vom Entfernungsmessmodul (100) generierte Messdaten,
• Empfang der Messdaten,
• Weiterverarbeiten der Messdaten, wobei ein Entfernungswert abgeleitet und bereitgestellt wird,
• Ausgabe des Entfernungswertes auf einer Anzeigevorrichtung (240).

15. Computerprogrammprodukt nach Anspruch 14,
**gekennzeichnet durch**
ein optionales Verfahren zum Messen eines Winkels (α) zwischen einer ersten Lage und einer zweiten Lage des Entfernungsmessgerätes (1) im Raum mit den Schritten
• Senden eines ersten Trigger-Signals an Winkelerfassungsmittel des Entfernungsmessgerätes (1),
• Warten auf von den Winkelerfassungsmitteln generierte erste Winkeldaten,
• Empfang der ersten Winkeldaten,
• Senden eines zweiten Trigger-Signals an die Winkelerfassungsmittel,
• Warten auf von den Winkelerfassungsmitteln generierte zweite Winkeldaten,
• Empfang der zweiten Winkeldaten,
• Weiterverarbeiten der ersten Winkeldaten und der zweiten Winkeldaten, wobei ein Winkel abgeleitet und bereitgestellt wird, und
• Ausgabe des Winkels auf der Anzeigevorrichtung (240), insbesondere wobei
• zeitgleich mit dem ersten Trigger-Signal und dem zweiten Trigger-Signal jeweils ein Trigger-Signal an die Laserentfernungsmesseinheit (110) gesendet wird,
• mit den Winkeldaten verknüpfbare Messdaten empfangen werden,
• aus den Messdaten und den Winkeldaten ein Spannmass errechnet wird, und
• das Spannmass auf der Anzeigevorrichtung (240) ausgegeben wird.
